# EUROPEAN PATENT APPLICATION

(11) **EP 1 323 965 A1**
(43) Date of publication of application: **02.07.2003**
(21) Application number: 01660251.8
(22) Date of filing: 21.12.2001
(51) Int. Cl.: F16K 27/10, B23K 9/32, B23K 37/06

(54) **Ball valve and its manufacturing method**

(71) Applicant: Suunnittelutoimisto A.J.A. Oy, 21600 Rauma (FI)
(72) Inventor: Weckman, Juhani, 20360 Turku (FI)
(74) Representative: Pirhonen, Kari Lennart

(57) **Abstract**

Ball valve (10) consisting of two halves (11,23) welded together to provide a body inside which there is a ball (12) with gaskets (13). The body halves include a shoulder (34) for a spring (14) and a gasket of the ball. The area of joint between the body halves features curved cuts with a stem bushing (15) welded to them. Inside the stem bushing there is a stem (30) made of round bar. One end of the stem is welded to the ball and the other end features a handle (29) for opening and closing the ball valve. At least one half of the body is made of pipe one end (40) which has been widened by cold working to provide a component of the valve housing. During welding there is a protective ring (21) at the welding seam (19) joining the halves between the ball and the body. The ring includes flanges (44), which are supported on the inner surface of the ball valve body so that the ring will be at a distance (45) from the welding seam. At the same time, the ring flanges also provide a spacer support for the ball gaskets.

## Description

### SUBJECT OF THE INVENTION

The subject of the invention is a ball valve comprising:
- a body consisting of two halves, which are welded together;
- a ball with related gaskets inside the body;
- a shoulder, which is formed on to the body half, for disk spring, ball gasket or other;
- a stem bushing, which is welded to the area of joint between the body halves;
- a shield ring, located inside the body and close to the welding seam, which protects the ball during welding; and
- a stem, which is joined to the ball to turn the ball for opening, closing or adjusting the ball valve.

Ball valves are used in pipe systems carrying liquid or gas for closing or adjusting the flow. A ball valve can be installed in the pipe system in a number of ways including welded, threaded or flange joints.

### STATE OF THE ART

One known ball valve of welding construction includes the ball, extension pipes located on both sides of the ball and a housing pipe to accommodate the ball and the extension pipes. The ball valve body is made by reducing both ends of the housing pipe over the extension pipes after which the ends of the housing pipe are welded to the extension pipes. Valve housing to accommodate the ball, which is located between the extension pipes, is made, for example, by reducing the ends of the extension pipes facing one another. Reduction of the ends creates shoulders, which are subsequently machined to create stuffing boxes required by the ball gaskets. Alternatively, separate rings are welded to extension pipe ends on to which the stuffing boxes of the ball are machined.

In the known ball valves the reduction of extension pipes causes variation in the valve porthole diameter. This, in turn, brings about undesirable turbulence in the flow through the valve and prevents efficient mechanical cleaning of the pipe system. Reducing the housing pipe when the stuffing box, consisting of the ball and the extension pipe, is inside the housing pipe will prevent grease, which is required in the reduction, to be completely removed by washing. Grease remaining on the valve components weakens the quality of welding.

In this known ball valve construction the bushing of the stem, which turns the ball, is welded to the opening in the housing pipe. After this, the stem with the related gaskets and bearings is installed in the stem bushing from inside the housing pipe. It should be noticed that in this construction the size of the housing pipe severely limits the maximum length of the stem and the stem bushing.

Usually, the ball is installed into the valve housing inside the housing pipe once its ends have been reduced. However, in some valves the ball has to be installed in the housing pipe before its ends are reduced because after reduction the ball would not fit into the housing pipe. The risk involved is, however, that reducing the housing pipe can easily damage the ball inside. Damages to the ball can, in turn, cause functional disorders of the valve and - in worst cases - damage the gaskets.

A ball valve is assembled by putting the ball inside the housing pipe and placing extension pipes to both sides of the ball. The extension pipes contain stuffing boxes with springs, support plates and gaskets. Pressing the extension pipes with a mandrel against the ball between them will load the springs in the stuffing boxes. Then, the compressive force directed to the extension pipes is slightly relaxed until the spring load pressing against the ball is desired. After this, the housing pipe ends are welded to the extension pipes.

The problem involved in the above assembly method is, however, that it is very difficult to control the spring forces pressing the ball from both sides during the assembly welding so that the compressive force would remain correct after the welding. This is due, among others, to variations in the manufacturing tolerance of the components to be assembled and ones in the surface quality. Other uncontrollable factors involved in this type of assembly include deformation taking place during welding and varying friction between different components.

One likely problem in some of the ball valves manufactured this way is that the spring force directed to the ball remains too strong. If the valve will then be used in conditions where it is exposed to great fluctuations of temperature and pressure, this initially too strong a spring force will press the ball gasket excessively causing the valve to get stuck. Too strong a compressive force can also cause the fact that when the valve is turned on or off, the edge of the ball cuts through the gasket pressing against the ball and, thus, damages the valve. In both cases, the valve is useless.

Assembly of this type of ball valve also involves other drawbacks, which make it difficult to achieve uniform product quality. First, it is difficult to keep the production tolerances of housing pipes and extension pipes within the desired limits because the tools used for working the pipes wear out quickly. This rapid wearing is caused particularly by the fact that reducing the pipe ends by pressing involves immense forces. High surface pressures created at the pressing stage naturally expose tools to rapid deterioration and even cause them to break down. Thus, the pressing tools require continuous servicing.

Second, the difficulty involved in pressing the valve components together and the problems related to the use of tools also mean that the housing pipe ends cannot be reduced very accurately. For this reason a sizeable gap remains between the housing pipe and the extension pipes. When assembling these components by fillet welding using simultaneously two welding torches while the valve body revolves around its longitudinal axis, the welding seam will not penetrate the cross-section completely. Consequently, there will be great variations in the welding joint quality.

In the known ball valves, the stem and the ball are usually connected by a groove on the ball into which the carrier key at the end of the stem fits. However, because the connection between such components require a sufficient clearance, due to production tolerances this clearance may indeed become too great. When turning the handle connected to the valve stem in this way, the ball does not follow the movement of the handle very accurately. This renders the valve function imprecise because the ball rotational angle remains smaller than that of the carrier key and the corresponding angle of the handle connected to the carrier key. Due to this clearance, the components wear down as the valve is used, which will lead to an increasingly harmful backlash.

Technical data of the ball valve are normally shown on a label attached to the valve body. When insulated, the valve body will be covered by the insulation material so the technical information of the valve cannot be seen any more. Similarly, the information cannot be seen when the ball valve has been placed, for instance, between two pipelines with the label on the side of the housing pipe. The label can also come off the valve.

The US patent document 2,573,177 presents a ball valve the body of which is composed of two pieces welded together. The halves of the valve body have been manufactured when hot by forging or casting into a mould. This valve involves metal foil rings - set against the ball on both sides - that function both as spring and gasket. However, this type of valve cannot function very well because it is not possible to make the valve tight using metallic seals.

The valve presented in the above publication features an air gap between the halves of the valve body at which the body halves have been welded together. Although the welding seam does not penetrate the cross-section of the welded components completely, weld spatters still hit the surface of the ball through the gap between the body halves and damage the ball surface during welding. This provides another reason why this valve cannot function in a satisfactory manner. Moreover, a welding seam joining the valve halves, which does not penetrate the cross-section completely is structurally weak.

In this valve construction the stem bushing has been welded to the body using a fillet weld once the body halves have been joined. Because this joint also involves an air gap, weld spatters may fall through the gap hitting the ball surface with possibly damaging consequences.

The US patent document 3,460,802 presents a ball valve the body of which is composed of two castings welded together. This type of structure is suitable only for large valves. The fact that all the fusion faces of the castings, which form the halves of the valve body, must always be machined before they are joined together makes the structure and assembly of this type of valve complex and difficult.

The ball valve presented in the specified publication features a shoulder, which has been machined on to the fusion face of the body halves. This shoulder centres the body halves before they are joined together. At the same time, a welding groove has been machined on to the joint. In the welding seam, the entrance of weld spatters to the ball surface has been prevented by machining to the joint an edge-flange over which the welding seam does not reach. The problem with this solution is the same as above, i.e. the welding seam is weak because it does not penetrate the cross-section completely.

Once the cast body halves of the ball valve presented in the above publication have been welded together, a fusion face for the stem bushing must be machined on to the body. Another fusion face and a shoulder, which comes against the machined fusion face of the body, must also be machined on to the cast stem bushing. After that, the stem bushing is welded to the body using a fillet weld.

### OBJECT OF THE INVENTION

The purpose of this invention is to achieve a new ball valve, which does not have the disadvantages presented above.

### CHARACTERISTIC FEATURES OF THE VALVE OF THE INVENTION

The ball valve of the invention is characterised in:
- that at least one of the body halves of the ball valve is a pipe one end of which has been widened using an adequate cold working method to provide a valve housing component featuring a cold-worked shoulder for a disk spring and a good-quality unmachined sealing face for a ball gasket or another item;
- that the body halves form a symmetrical valve housing and the welding seam between them is located, in the main, at the centre of the ball;
- that at the said welding seam, there are tapered cuts on the edges of the body halves. When the body halves are set face to face these cuts form a conical opening in which the tapered end of the stem bushing can be fitted so that the stem bushing will stand perpendicularly to the longitudinal axis of the body and at a desired distance from the longitudinal centre line of the ball valve body; and
- that there is a protective ring - or a segment of such a ring - inside the symmetrical valve housing mainly at the centre of the ball. This ring - or ring segment - protects the ball both at the welding seam between the body halves and at the welding seam between the valve housing and the stem bushing.

### EMBODIMENTS OF THE VALVE OF THE INVENTION

A preferred embodiment of the ball valve of the invention is characterised in that the protective ring located inside the ball valve housing between the ball and the body is a bent sheet metal ring, a cut ring or a segment of such a ring the edges of which have been folded to provide flanges supported on the inner surface of the ball valve body. The gasket rings of the ball are directly, or through an intermediary piece, supported on these flanges.

A second preferred embodiment of the ball valve of the invention is characterised in that the protective ring located inside the ball valve housing between the ball and the valve body is in contact with the welding seam joining the body halves, or at a distance from both the ball and the inner surface of the ball valve body so that a gap providing a shielding gas pocket is formed at the welding seam between the protective ring and the halves of the ball valve body.

A third preferred embodiment of the ball valve of the invention is characterised in that in the protective ring located inside the ball valve housing between the ball and the valve body there is a gap and/or preferably a round opening for the stem welded to the ball and, possibly, for an auxiliary spindle and that preferably, and as a rule, the stem and/or the auxiliary spindle are made of round bar.

### MANUFACTURING METHOD OF THE INVENTION

Furthermore, the object of the invention is to achieve a new method for manufacturing ball valves, which method is more efficient and more advantageous compared to the known solutions. According to the new method of the invention, gaskets and springs are first placed against shoulders of the body halves, after which the ball is inserted between the halves and, finally, the valve housing of the ball valve is formed by welding the two body halves together.

### CHARACTERISTIC FEATURES OF THE MANUFACTURING METHOD OF THE INVENTION

The manufacturing method of the ball valve of the invention is characterised in that
- at least one half of the ball valve body is formed out of pipe by widening its other end using an adequate cold-working method to provide a valve housing half, which has a shoulder for spring and a good-quality unmachined sealing face for a gasket of the ball, or another piece;
- tapered cuts are made on the fusion edges of the valve body halves;
- a stem bar is welded to the ball;
- the mainly symmetrical valve housing is constructed by setting the widened ends of the halves face to face;
- gaskets, springs and the ball with the related stem bar are inserted in the valve housing;
- protective ring, or a segment of such a ring, is placed around the ball so that the end of the stem bar, which has been joined with the ball will come out of the valve housing through the opening formed by the cuts at the edges of the body halves;
- a stem bushing is placed around the stem bar so that the tapered end of the bushing will come against the edges of the conical opening formed by the tapered cuts at the edges of the halves of the valve body. Thus, the stem bushing stands perpendicularly to the longitudinal axis of the body and at a desired distance from the longitudinal centre line of the ball valve body;
- the halves of the valve body are joined by a weld seam that penetrates the cross-section completely. After this, the stem bushing is welded to the body with another completely penetrating seam. Preferably, these two seams should be welded in one continuous phase of work and without using shielding gas.

### EMBODMENTS OF THE MANUFACTURING METHOD OF THE INVENTION

A preferred embodiment of the manufacturing method of the ball valve of the invention is characterised in that
- a protective ring, or a segment of such a ring, provided with edge-flanges is placed between the ball and the body before the halves of the ball valve body are joined;
- the gasket rings of the ball are set against the edge-flanges of the protective ring so that the protective ring will provide a spacer support for the gasket rings; and
- the body halves are brought face to face and welded together.

Yet another preferred embodiment of the manufacturing method of the ball valve of the invention is characterised in that
that the edge-flanges of the protective ring of the ball are set against the inner surface of the body halves so that a gas pocket will be formed between the protective ring and the body. This gas pocket makes the use of shielding gas redundant.

The ball valve of the invention is essentially simpler and more advantageous to manufacture and to assemble than the known valves. This is because the ball valve of the invention consists of fewer parts, has fewer surfaces that need to be machined and involves fewer phases of work than the known valves. Owing to the small number of parts, the rated length of the ball valve of the invention is also shorter than that of the known ball valves. In addition, for reasons presented above, the need for raw materials is smaller than that of the known valves. Thanks to the great manufacturing accuracy, the gaskets are never pressed against the ball with excessive force so the valve can be opened and closed exercising only small torque. The required opening and closing torque is not affected by the differential pressure or temperature difference.

### EXAMPLES OF EMBODIMENTS

An account of the invention is given hereunder using examples with references made to the enclosed drawings as follows:

### LIST OF DRAWINGS

- Fig. 1: shows a vertical section of the ball valve of the invention seen from the side.
- Fig. 2: corresponds to Fig. 1 and shows a vertical section of another embodiment for the ball valve.
- Fig. 3: shows a cross-section of the halves of the ball valve body and the stem bushing in Fig. 1 before welding.
- Fig. 4: shows a ball valve of Fig. 1 seen from above.
- Fig. 5: corresponds to Fig. 3, seen from above.
- Fig. 6: shows a vertical section of the ring inside the valve housing of the ball valve.
- Fig. 7: corresponds to Fig. 6 and shows a second embodiment for the ring.
- Fig. 8: corresponds to Fig. 6 and shows a third embodiment for the ring.
- Fig. 9: shows a schematic view of the widening of the end of the ball valve housing pipe.
- Fig. 10: corresponds to Fig. 1 and shows a third embodiment for the ball valve.
- Fig. 11: shows an axonometrical presentation of the ring inside the valve housing of the ball valve according to a fourth embodiment.
- Fig. 12: corresponds to Fig. 11 and shows a fifth embodiment for the ring.
- Fig. 13: corresponds to Fig. 1 and shows a fourth embodiment for the ball valve.

### DESCRIPTION OF DRAWINGS

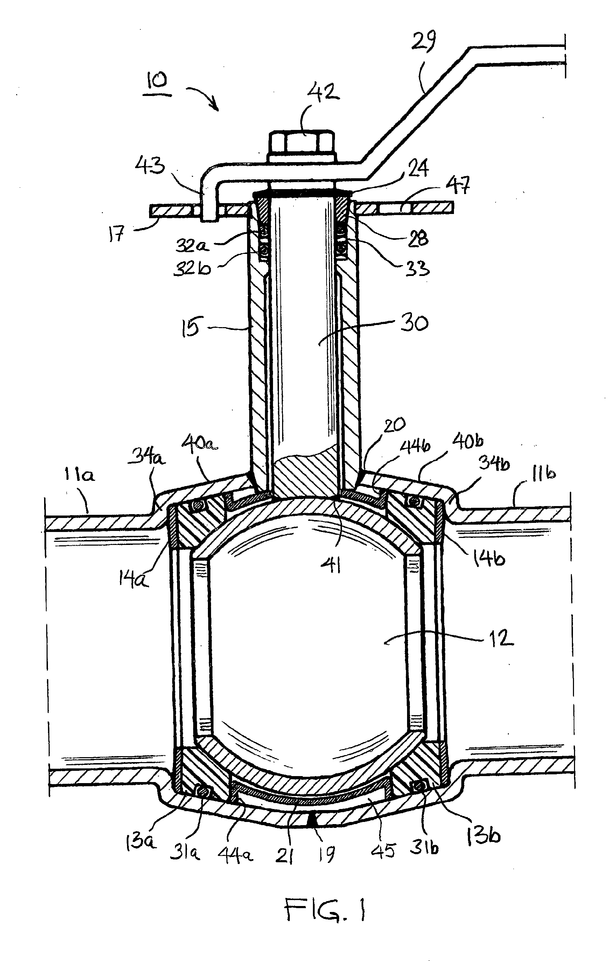

The body of ball valve 10 in Figure 1 consists of two identical housing pipes, 11a and 11b, welded together. One end of these pipes, 40a and 40b, has been widened by cold working. Unmachined shoulders 34a and 34b have been formed between the straight sections of housing pipes 11a and 11b and their widened parts 40a and 40b. Shoulders are provided for ring-type gaskets and for ring springs 14a and 14b. Once housing pipes 11 a and 11 b have been joined together by welding seam 19, their widened parts 40a and 40b form the valve housing for ball 12. Figure 1 does not show the connection pieces of ball valve 10 by means of which the valve is connected to a pipe system. This construction supports all known pipe connection types including welded joint, flange joint or threaded joint.

Ball valve in Figure 1 features ball 12 and ring-type gaskets 13a and 13b as well as ring springs 14a and 14b placed on both sides of the ball. The ball and the ring springs are inserted in the valve housing formed by widened parts 40a and 40b of housing pipes 11 a and 11b before these pipes are joined by welding. Preferably, ring-type gaskets 13a and 13b should be made of hard and lubric plastic material, such as PTFE. Ring springs 14a and 14b are supported on shoulders 34a and 34b of the body. The ring springs press gaskets 13a and 13b against the surfaces of ball 12 by desired force so that a tight sealing is formed between the smooth-ground ball 12 and gasket rings 13a and 13b. Spaces between the hard plastic gasket rings 13a and 13b and the unmachined inner surfaces of housing pipes 11 a and 11b are sealed using O-ring gaskets 31a and 31 b, which are placed in the grooves of gasket rings 13a and 13b.

Ball 12 of ball valve 10 is turned by stem 30. From the manufacturing point of view, this stem is an inexpensive straight bar with no limitation on its length. The round bar of stem 30 is machined only for the surface required by joining of ball 12 and stem 30 and, at the opposite end of stem 30, for the surfaces required by joining of handle 29. Stem 30 does not require a shoulder used in the known stems to prevent the stem from being pushed out. Therefore, the stem of the invention brings in considerable savings in terms of machining and raw material. In addition, stem 30 does not have a notch, which - in the known stems - weakens the construction and increases the diameter.

Stem 30 is joined to ball 12 by welding seam 41 so that the envelope surface of ball 12 remains intact and the joint is free from any backlash. Welded joint 41 between stem 30 and ball 12 is essential because for this reason there is no need to puncture the casing of ball 12 for the connection. In the known ball valves the joint between the stem and the ball has been made by fitting the carrier key shaped at the end of the stem into the slot opening made in the surface of the ball. Unlike in the known ball valves, owing to its closed structure, fluid to be conducted through ball valve 10 has no access to spaces located above and beneath ball 12, between the ball and housing pipes 11a and 11b. It is known that impurities in the fluid having leaked between the gasket rings inside the ball valve body can impair the valve function. It is especially harmful if this space is filled with water since water remains here even when the valve itself and the related pipe system are drained. Exposing a valve containing any amount of water to freezing temperatures can seriously damage the valve. The situation is made troublesome by the fact that the user of the valve cannot see whether there is any water in the valve or not.

In ball valve 10 of Figure 1 stem 30 is placed inside stem bushing 15, which has been joined to the body of ball valve 10 by welding seam 20. Having been assembled using two identical housing pipes 11a and 11b, the body of ball valve 10 is symmetrical. This allows equally symmetrical joining of stem bushing 15 to the body at welding seam 19 between housing pipes 11a and 11b. Gaskets 32a and 32b, preferably O-ring gaskets, located between stem 30 and stem bushing 15, and spacer plate 33 between these gaskets are placed in the stuffing box formed at the upper end of stem bushing 15. Gaskets 32a and 32b are pressed in place by bushing 28 placed around stem 30. After this, bushing 28 is tightened in position on stem 30 by means of lock washer 24. Bushing 28 is preferably conical by shape so the top of stem 30 can be tightened without any backlash. Lock washer 24 also takes on forces directed to stem 30 and ball 12.

The presented ball valve 10 has none of the disadvantages involved in the known solutions. In the known ball valves, packing box at the top of the stem is cylindrical. Since dimensional accuracy of stem bushings made of PTFE is poor, backlash of the stem cannot be entirely eliminated. This weakens the tightness of the O-ring used for stem sealing. In worst case, the gasket will leak. When using tapered bushing 28 - characteristic to the invention - which is tightened in position by lock washer 24, stem 30 is totally free from backlash and the O-ring operates under ideal circumstances. This construction also allows retightening.

Handle 29, which is locked in place by screw 42, has been connected to the opposite end of stem 30 of ball 12. Tip 43 of handle 29 has been shaped as a pointer the position of which shows whether ball valve 10 is open, closed or partly open. Position of ball 12 of ball valve 10 and that of the connected handle can be read in identification plate 17 connected to stem bushing 15. This identification plate also contains technical information of ball valve 10. Identification plate 17 has a hole for tip 43 located at the end of handle 29. This way identification plate 17 also sets the limits to the extreme open and closed positions of handle 29. Identification plate 17 allows handle 29 to be adjusted to any of the intermediate positions between the opening and closed positions. Because identification plate 17 is located at a distance from body 11 of ball valve 10, the identification data related to ball valve 10 can be easily seen even when body 11 of ball valve 10 is covered with heat insulation.

Ball valve 10 of Figure 1 features ring 21, or a segment of such a ring, which has been placed inside the valve housing between ball 12 and body 11. Ring-type gaskets 13a and 13b are supported on edge-flanges 44a and 44b of this ring. This provides counter backing for plastic gaskets 13a and 13b preventing ring springs 14a and 14b from pressing gaskets 13a and 13b too forcefully into the gap between ball 12 and widened parts 40a and 40b of housing pipes 11 a and 11b.

Edge-flanges 44a and 44b of ring 21 are also supported on the inner surfaces of widened parts 40a and 40b of housing pipes 11a and 11b of ball valve 10 so that air gap 45 is formed between ring 21 and the body of ball valve 10. In addition, edge-flanges 44a and 44b position ring 21 in the centre so that it cannot touch ball 12. This is indeed the second essential function of ring 21 as it protects ball 12 when housing pipes 11a and 11b are welded together. Moreover, air gap 45 between ring 21 and the body of ball 10 is essential because now ring 21 cannot be joined to body 11 of ball valve 10 unintentionally during the welding phase. However, in some welding methods it is essential that no air gap exists between ring 21 and body 11. In that case ring 21 will be shaped in another way as described below.

Ball valve 10 is assembled so that first ring springs 14a and 14b and ring-type gaskets 13a and 13b are set against unmachined shoulders 34a and 34b of widened parts 40a and 40b of both housing pipes 11a and 11b. After this, ball 12 and stem 30, which is welded to the ball, as well as protective ring 21 surrounding the ball are placed between housing pipes 11a and 11b upon which the widened parts 40a and 40b of the housing pipes are pressed against each other. Stem bushing 15 is set around stem 30 and the tapered bottom of stem bushing 15 is fitted into the conical opening formed by the tapered cuts made on the edges of widened parts 40a and 40b of housing pipes 11a and 11b. These tapered cuts are made, for instance, by plasma or laser cutting. Similarly, the corresponding conical surface of stem bushing 15 can be either machined or cut by plasma or laser cutting.

Owing to the conicality of the holes made in stem bushing 15 and housing pipes 11a and 11b, stem bushing 15 is positioned perpendicularly to the body of ball valve 10 and is set at a desired distance from the longitudinal centre line of the body of the ball valve 10. After this, widened ends 40a and 40b of housing pipes 11 a and 11b as well as stem bushing 15 are welded together by complete penetration in one continuous welding phase. There must be no interruptions in the power supply during the welding process. In complete penetration, welding run 19 joins the fusion faces completely across the section. The preferable welding method is plasma arc welding or laser welding but other methods such as TIG welding can also be used. Complete penetration can be carried out because ball 12 is shielded by protective ring 21 all over the welding seams. Thus, possible weld spatters cannot damage the surfaces of ball 12. Due to complete penetration, the joints of the body and the stem bushing will be solid and the valve will also become extremely tight. Because of this tightness, the range of use of the valve of the invention is distinctly wider than that of the known welded ball valves making the new valve suitable, among others, for gas piping.

In addition, the construction of ball valve 10 of Figure 1 is notably solid. Ring-type gaskets 13a and 13b of ball 12 are highly stationary because they are pressed from both sides by ring springs 14a and 14b against edge-flanges 44a and 44b of protective ring 21 inside the valve housing. However, this does not decrease the flexibility of gasket rings 13a and 13b so that the compressive force directed to ball 12 through gaskets 13a and 13b can be appropriately adjusted. Adjusting the compressive force directed through gaskets 13a and 13b to ball 12 so that it will be exactly right requires that one essential dimension, the distance between shoulders 34a and 34b of housing pipes 11a and 11b, is known precisely. In production, this dimension together with the manufacturing accuracy of the components is an essential but controllable factor. This also explains the requirement of greater precision expressed in plasma or laser cutting of the fusion faces of widened ends 40a and 40b of housing pipes 11a and 11b.

Due to the correct load of ring springs 14a and 14b and the design of gasket rings 13a and 13b, torque required to turn handle 29 of ball valve 10 of the invention is small and the turning movement is smooth. Gaskets 32a and 32b of stem 30 and conical bushing 28 are highly stationary because they are locked in place by lock washer 24, which also takes on forces parallel with stem 30 and directed to ball 12. Owing to lock washer 24, no groove needs to be machined on stem 30. Such a groove would produce a notch effect weakening the stem. So stem 30 can be a relatively thin round bar. In contrast, the known stems have several notches, which is why they must be made essentially thicker.

In ball valve 10 of the invention, the torque is even and relatively small regardless of operating conditions. This is due to, among others, backing ring 21 between gasket rings 13a and 13b and the shape of ring springs 13a and 13b and that of gaskets 13a and 13b, which create a relatively even pressure directed to ball 12. In the known ball valves the back and forth movement of gaskets exposes them to wear reducing their lifetime. Backing ring 21 also provides ball 12 and gaskets 13a and 13b with protection against weld spatters enabling a completely penetrating seam without the use of shielding gas.

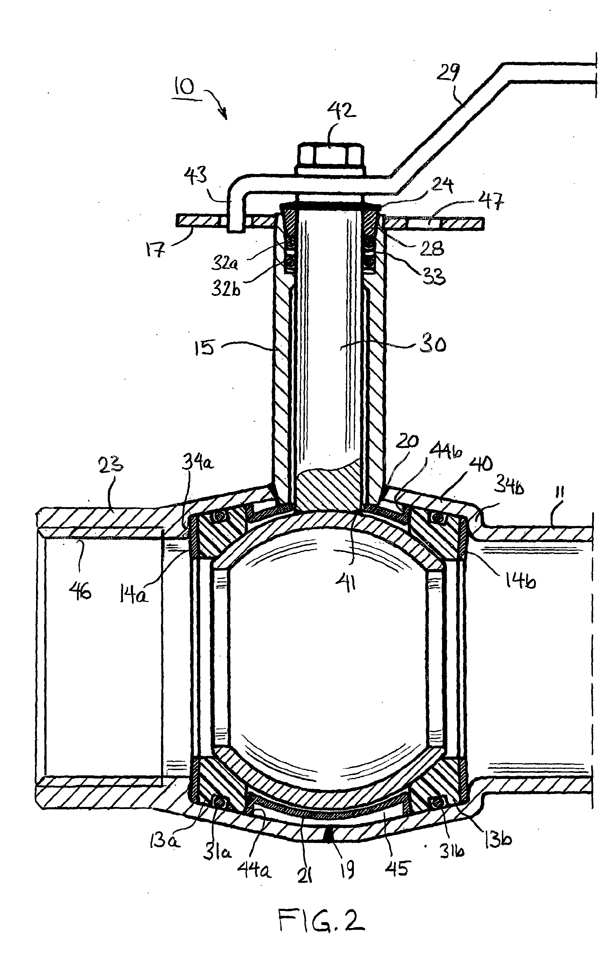

Figure 2 shows ball valve 10 the body of which has been assembled by joining housing pipe 11 - widened by cold working - with the machined pipe body 23. Internal thread 46 has been machined to pipe body 23 where, additionally, the valve housing and shoulder 34a are machined, whereas in housing pipe 11 the corresponding parts have been cold-worked. It is essential to the machined pipe body 23 that assembly weld seam 19 will not be located at or close to thread 46 as is the case in the known ball valves in which the thread is subject to uncontrollable deformation due to the vicinity of the seam. There is a backing and protective ring 21, characteristic to the invention, between the body of ball valve 10 and ball 12 at welding seam 19. This ring supports gasket rings 13a and 13b and protects ball 12 during welding.

The method described above can also be used to machine, for instance, a pipe body with a flange joint. All the alternative pipe bodies can be combined so that the ball valve can consist of one body half, which has been cold-worked out of a pipe, machined and threaded, or machined and featuring a flange. The second body half can be either similar to its counterpart, or any of the ones described above. For the body halves, several different raw-material options are possible including cold-worked pipe and machined casting. The essential feature of this construction is, however, that in the valve housing between the ball and the ball valve body there is a backing and protective ring characteristic to this invention.

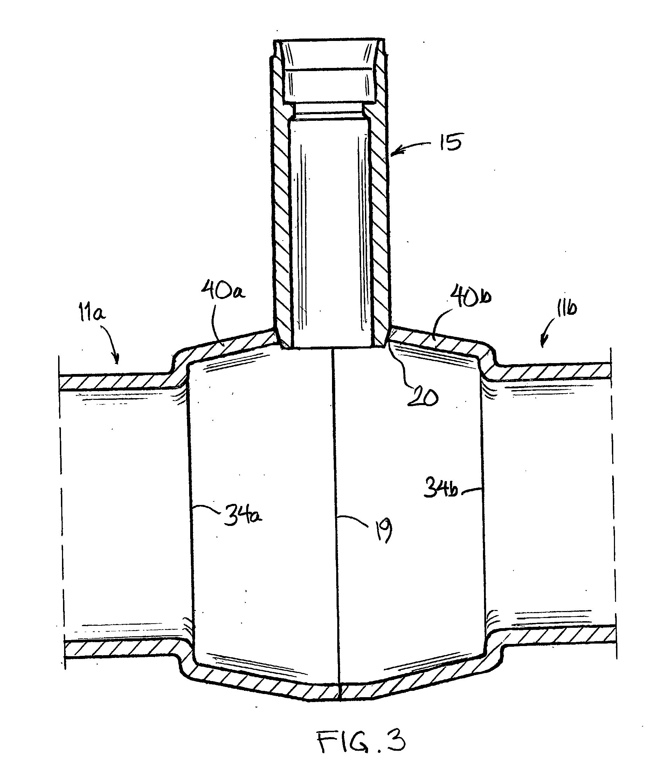

Figure 3 shows schematically a body of the ball valve and a stem bushing assembled before welding. In this application both body halves 11a and 11b are pipes the other end, 40a and 40b, of which has been widened by cold working. Widened ends 40a and 40b are set face to face for welding. The coming welding seam has been marked with index number 19. The bottom of stem bushing 15 has been tapered to be joined with the body. The edges of housing pipes 11a and 11b to be set against each other have been provided with tapered cuts, which, when put together, form a conical opening for the tapered end of stem bushing 15. The coming welding seam of stem bushing 15 has been marked with index number 20.

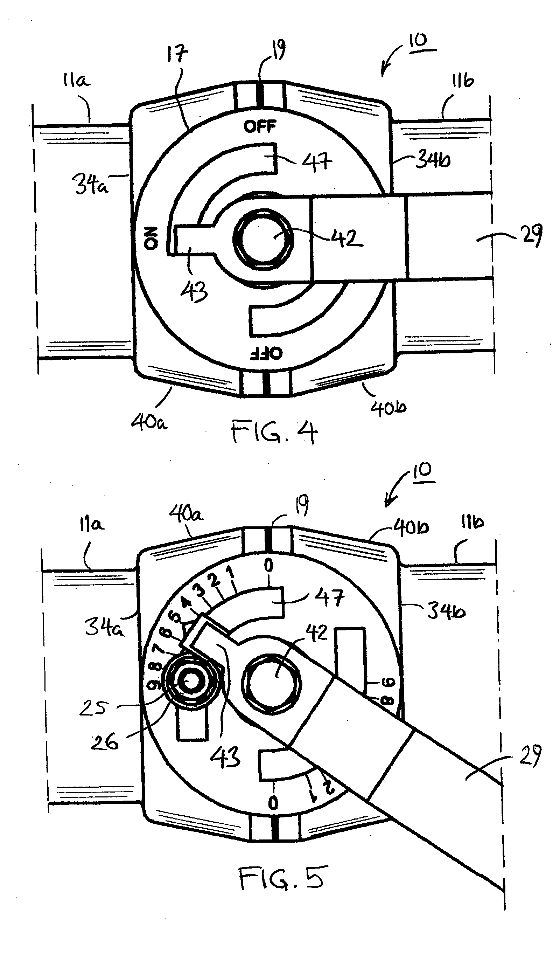

Figure 4 shows a view from above of ball valve 10 characteristic to this invention. Identification plate 17 is located at the top of the stem bushing at a distance from the body of ball valve 10 so that identification plate 17 remains visible when the ball valve body is covered with insulation. Tip 29 of handle 43 has been shaped as a pointer the position of which shows whether ball valve 10 is open or closed. Tip 43 is in hole 47 of identification plate 17 so that identification plate 17 simultaneously provides a limiter for the extreme open and closed positions of handle 29.

Figure 5 shows a view from above of the second form of application for ball valve 10, which is a control valve. Provision for adjustment of the valve is achieved by placing the adjustment plate - made of metal or synthetic material - between the ring spring and the gasket ring in front of the ball hole. The figure shows the construction of ball valve 10 for the part of identification plate 17. Similarly, the adjustable-type identification plate 17 is located at the top of the stem bushing at a distance from the ball valve 10 body so that the adjustable-type identification plate 17 remains visible even when the ball valve body is been covered with insulation. Different adjustment positions of the ball are limited by the screw and nut in the groove of the identification plate so that the pre-set value of the valve can be seen on the plate. The desired adjustment characteristic will be achieved by changing the shape of the hole in the adjustment plate located in the ball valve housing.

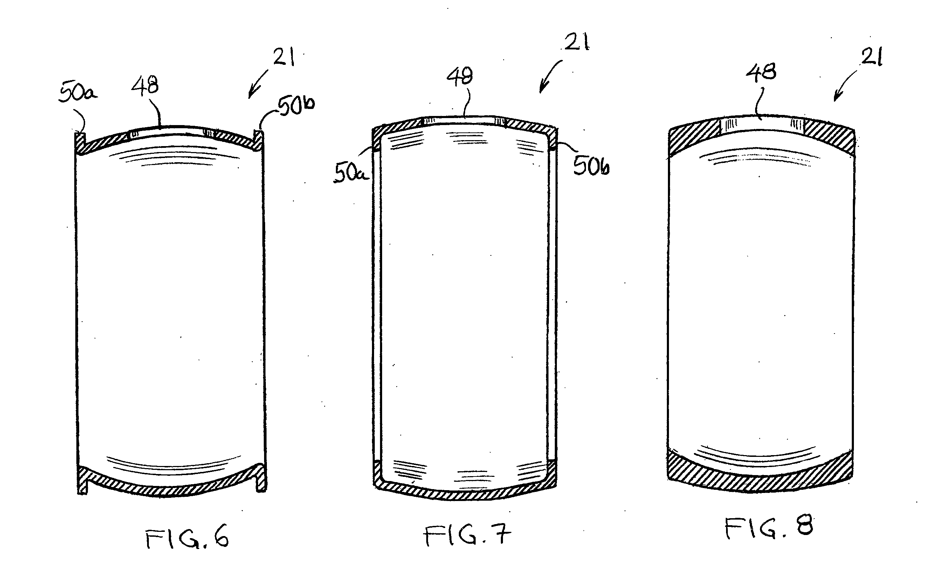

Figure 6 shows a vertical section of ring 21 shown in Figure 1. The ring is located in the valve housing of ball valve 10 and it protects ball 12 during welding while also providing support between gaskets 13a and 13b of ball 12. Ring 21 has a hole for stem 30. Ring 21 is made of bent sheet metal so that its edges have been folded to form flanges 50a and 50b, which are supported on the inner surfaces of the body of ball valve 10. In turn, gaskets 13a and 13b of ball 12 are supported on these flanges.

The height of flanges 50a and 50b is dimensioned so that ring 21 will not touch ball 12, which is placed inside the ring. By varying the height of flanges 50a and 50b the surface of ring 21 can be set in contact with the inner surface of body 11 of ball valve 10, or off the surface so as to create air gap 45 between ball 12 and body 11, as shown in Figure 1. Whether protective ring 21 is set in contact with the inner surface of body 11 of ball valve 10 or off it depends on the welding method to be used for joining body halves 11a and 11b.

Figure 7 shows another application for protective and backing ring 21 in which flanges 50a and 50b provided for gaskets 13a and 13b have been folded inward. In this case, the surface of ring 21 will be in direct contact without any air gap with the inner surface of body 11 of ball valve 10 at the welding seam.

Figure 8 shows a third application for protective and backing ring 21. This one can be made, for instance, by machining. The geometry of the cross-section of ring 21 includes support surfaces provided at its edges for gaskets 13a and 13b to be placed on both sides of ball 12. In case the ring is made of inflexible material, it is advisable to split the ring it two parts for assembly.

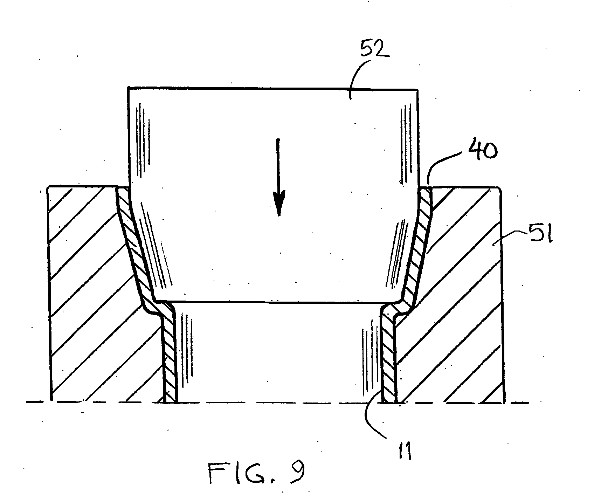

Figure 9 shows schematically the widening of housing pipe 11 of ball valve 10 characteristic to this invention. The used original material is metal pipe 11 end 40 of which is widened by cold working. Pipe 11 is set to mould 51 for working after which end 40 of pipe 11 is widened against the walls of mould 51 using a smooth mandrel 52 inserted in the pipe. For this purpose, the inner surface of the widened part of pipe 11 will provide a smooth and tight sealing face without machining.

Should it be desirable to relief the finished pipe body from any tensions in the metal caused by the cold working, then pipe body 11 will be heat-treated after working. In the known valves the tensions of pipe bodies cannot be relieved because it is not possible to heat-treat finished valves with gaskets.

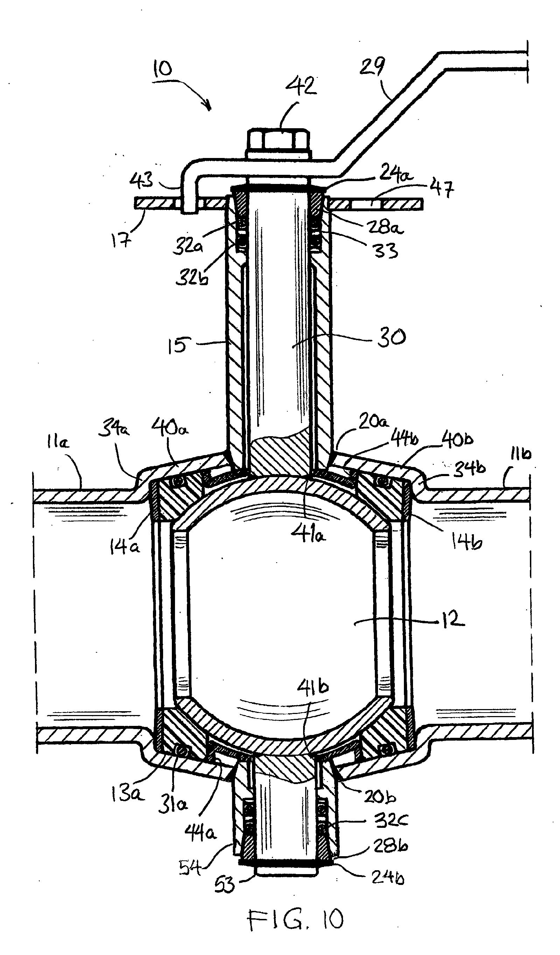

Figure 10 shows another application for ball valve 10 characteristic to this invention. This application features stem 30 joined to one side of ball 12 by welding seam 41a and auxiliary spindle 53 joined to the opposite side of ball 12 by welding seam 41 b. For auxiliary spindle 53, spindle bushing 54 has been joined by welding seam 20b to body 11. The end of this spindle bushing can be open or closed. Auxiliary spindle 53 has similar gaskets 32c, bushing 28b and lock washer 24b as stem bushing 15. Construction featuring auxiliary spindle 53 is essential in sizeable ball valves 10 because a floating ball 12 featuring only stem 30 would direct exceedingly strong forces to gaskets 13a and 13b.

Ball valve 10 characteristic to this invention and featuring auxiliary shaft 53 is assembled in the same way as the one without the auxiliary spindle. The difference is that spindle bushing 54 is joined to body 11 at the same time with stem bushing 15. They can be assembled in one continuous welding phase.

For sizeable ball valves 10 it is possible to make protective ring 21 and seal followers 44a and 44b of gaskets 13a and 13b of ball 12 also separately, because as one piece the ring would become extremely wide. Then, seal followers 44a and 44b of gaskets 13a and 13b can be attached, for instance, directly to the inner surface of body 10 of ball valve 11.

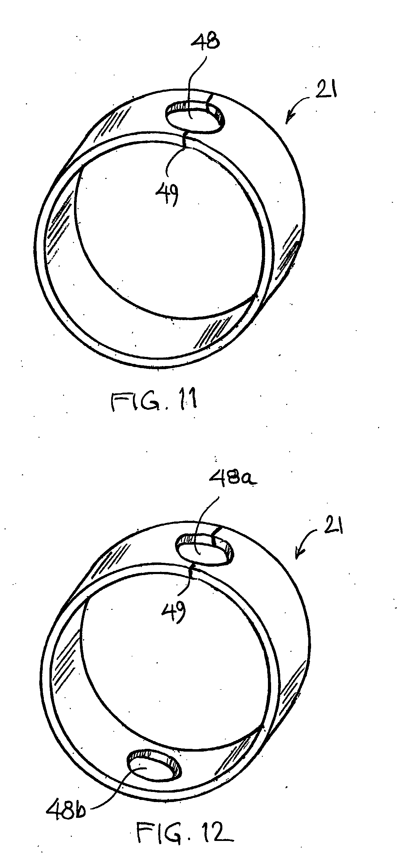

Figure 11 shows ring 21, characteristic to the ball valve of this invention, to be located between body 11 and ball 12. The purpose of this ring is to protect ball 12 and its gaskets 13a and 13b during the assembly welding of housing pipes 11a and 11b and stem bushing 15. The edges of ring 21 also provide support backing for gaskets 13a and 13b of ball 12 coming to both sides of the ring.

Ring 21 has opening 48 for stem 30. Furthermore, ring 21 features cut-off point 49 at opening 48 so that parts of ring 21 on different sides of the cut-off point can be bent away from each other at the assembly stage. Then, ball 12 can be placed inside ring 21 and stem 30, which is welded to the ball, is put into opening 48. After this, the aggregate consisting of ball 12, stem 30 and ring 21 is placed in the valve housing formed by the widened parts 40a and 40b of halves 11 a and 11 b of the body. Prior to this, ring springs 14a and 14b and gasket rings 13a and 13b are placed against shoulders 34a and 34b of halves 11a and 11b of the body for ball 12.

Figure 12 shows another application for ring 21. In addition to opening 48a for stem 30, this ring 21 includes a second opening 48b for auxiliary spindle 53. If ring 21 is made of inflexible material, it will be essential to make a similar cut-off point for opening 48b as has been provided for opening 48a. Thus, the ring consists of two parts facilitating the assembly of ball valve 10.

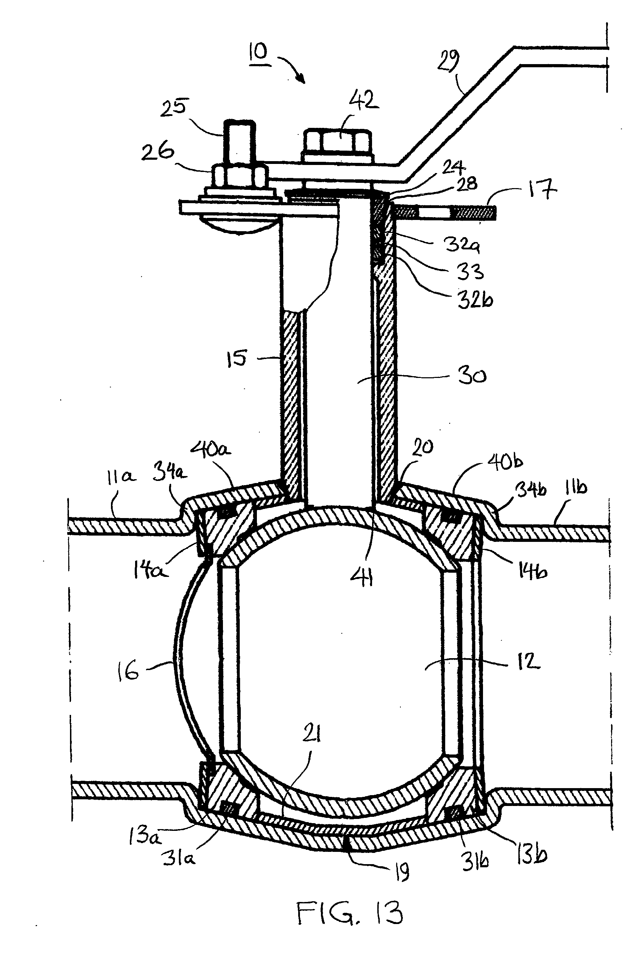

Figure 13 shows ball valve 10, which is also a control valve. The adjustability of the valve has been achieved by placing adjustment plate 16 featuring an appropriately shaped opening between ring spring 14a and gasket 13a of ball 12. This type of construction is useful since now gasket 13a and adjustment plate 16 will move together whenever ball 12 is pressed against gasket 13a under pressure. Due to this, there is a constant clearance between ball 12 and adjustment plate 16.

At the same time screw 25, tightened by nut 26 and connected to identification plate 17 of ball valve 10, limits the movement of handle 29. Furthermore, this application includes protective plate 21 between ball 12 and body 11 without any folded edges.

## Claims

1. Ball valve (10) comprising
- a body consisting of two halves (11a, 11b, 23) welded together;
- a ball (12) with related gaskets (13a, 13b) inside the body;
- a shoulder (34) that has been shaped on to the body half (11) for spring (14), gasket (13) of the ball (12), or other;
- a stem bushing (15) welded to the area of joint (19) between the body halves;
- a protective screen (21), inside the body and close to the welding seam (19), which protects the ball (12) during welding; and
- a stem (30) joined to the ball (12) for turning the ball and for opening, closing or adjusting of the ball valve (10).
**characterised in**
- **that** at least one of the body halves (11, 23) of the ball valve (10) is a pipe the end (40) of which has been widened using an adequate cold working method to provide a part of the valve housing, which includes a cold-worked shoulder (34) for the spring (14) and a good-quality unmachined sealing face for the gasket (13) of the ball (12), or for another piece;
- **that** the body halves (11, 23) form a symmetrical valve housing the welding seam (19) between of which is located, in the main, at the centre of the ball (12);
- **that** at the said welding seam (19) and located at the edges of the body halves (11, 23) there are tapered cuts, which will - when the halves are brought face to face - form a conical opening into which the tapered end of the stem bushing (15) can be fitted so that the stem bushing will be set perpendicularly to the longitudinal axis of the body and at a desired distance from the longitudinal centre line of the body of the ball valve (10); and
- **that** there is a protective ring (21) - or a segment of such a ring - located primarily at the centre of the ball (12) inside the symmetrical valve housing. This ring protects the ball at the welding seam (19) between the body halves (11, 23) and at the welding seam (20) between the valve housing and the stem bushing (15).

2. Ball valve (10) according to claim 1, **characterised in that** the protective ring (21), located in the valve housing of the ball valve (10) between the ball (12) and the body (11, 23), is a bent ring, a cut ring, or a segment of a ring, made of sheet metal, and the edges of which have been folded as flanges (44a, 44b) supported on the inner surface of the body of the ball valve, and on which the gasket rings (13A, 13b) of the ball are supported either directly or through an intermediate piece.

3. Ball valve (10), according to claim 1 or 2, **characterised in that** the protective ring (21), located in the valve housing of the ball valve (10) between the ball (12) and the body (11, 23), is either in contact with the welded seam (19) between the body halves (11a, 11b, 23) or at a distance from both the ball and the inner surface of the ball valve body so as to form a gap (45) providing a shielding gas pocket at the welding seam between the protective ring and the halves of the ball valve body.

4. Ball valve (10), according to claim 1,2 or 3, **characterised in that** there is a gap and/or preferably an opening in the protective ring (21), which is located in the valve housing of the ball valve (10) between the ball (12) and the body (11, 23). This gap and/or opening is located at the stem (30), which is welded to the ball, and possibly at an auxiliary spindle (53). Preferably, the stem and/or the auxiliary spindle are made of round bar.

5. Manufacturing method of the ball valve (10) according to which the valve housing of the ball valve is constructed by welding together the body halves (11 a, 11b, 23) between which first the gaskets (13a, 13b) will be placed with the springs (14a, 14b) against the shoulders (34a, 34b) of the body halves followed by the ball (12)
**characterised in that**
- at least one body half (11a, 11b) of the ball valve (10) is constructed of pipe by widening its one end (40a, 40b) by suitable cold working method to provide a half of the valve housing, which includes a shoulder (34a, 34) for the spring (14) and a good-quality unmachined sealing face for the gasket (13) of the ball (12), or for other;
- tapered cuts are made to those edges of the valve body halves (11 a, 11b), which are to be joined with each other;
- a stem bar (30) is welded to the ball (12);
- the mainly symmetrical valve housing is constructed by setting the widened parts of the halves (11 a, 11b) face to face;
- the gaskets (13a, 13b), springs (14a, 14b) and the ball (12) with its stem bar (30) are placed in the valve housing;
- a protective ring (21) - or a segment of such a ring - is placed around the ball (12) so that the end of the stem bar (30), which is joined with the ball (12), comes out of the valve housing through the opening (48) in the protective ring and the opening formed by the cuts at the edges of the body halves (11a, 11b);
- a stem bushing (15) is placed around the stem bar (30) so that the tapered end of the stem bushing comes against the edges of the conical opening formed by the tapered cuts at the edges of the valve body halves (11 a, 11 b) so that the stem bushing stands perpendicularly to the longitudinal axis of the body and at a desired distance from the longitudinal centre line of the body of the ball valve (10); and
- the valve body halves (11a, 11b) are welded together by a complete-penetration seam (19) and the stem bushing (15) welded to the body by another complete-penetration seam (20), preferably so that the specified welded seams (19, 20) are performed in one continuous work phase and without the use of shielding gas.

6. Manufacturing method, according to claim 5, **characterised in that**
- prior to joining the halves (11a, 11b, 23) of the ball valve (10) body, a protective ring (21) - or a segment of such a ring - featuring edge-flanges (44a, 44b) is placed between the ball (12) and the body;
- the gasket rings (13a, 13b) of the ball (12) are set against the edge-flanges (44a, 44b) of the protective ring (21) so that the protective ring will provide a spacer support for the gasket rings (13a, 13b); and
- the body halves (11a, 11 b, 23) are set face to face and welded together.

7. Manufacturing method, according to claim 6, **characterised in that** the edge-flanges (44a, 44b) of the protective ring (21) of the ball (12) are set against the inner surface of the body halves (11a, 11b, 23) so that a gas pocket is formed between the protective ring and the body and wherein this gas pocket is used to replace any shielding gas, which might otherwise be needed.
